(19) Europäisches Patentamt
European Patent Office
Office européen des brevets

(11) **EP 4 633 160 A1**

(12) **EUROPEAN PATENT APPLICATION**

(43) Date of publication:
**15.10.2025 Bulletin 2025/42**

(21) Application number: **24305574.6**

(22) Date of filing: **09.04.2024**

(51) International Patent Classification (IPC):
*H04N 19/176* (2014.01)    *H04N 19/52* (2014.01)
*H04N 19/593* (2014.01)

(52) Cooperative Patent Classification (CPC):
**H04N 19/52; H04N 19/176; H04N 19/593**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **RADOSAVLJEVIC, Milos 35000 RENNES (FR)**

• **NASER, Karam 35250 MOUAZE (FR)**
• **CHEN, Ya 35700 RENNES (FR)**
• **LE LEANNEC, Fabrice 35830 BETTON (FR)**

(74) Representative: **Rittner, Karsten Rittner & Partner Patentanwälte mbB Schiffgraben 17 30159 Hannover (DE)**

(54) **INTRA BLOCK COPY MERGE / ADVANCED MOTION COMPENSATION LIST AND INTRA TEMPLATE MATCHING PREDICTION MERGE LIST ENRICHMENT**

(57)    Systems, methods, and instrumentalities are disclosed for determining whether to include a best-by-cost block vectors (BV) in a list of candidates such as, for example, an intra-block copy (IBC) merge and advanced motion vector prediction (AMVP) candidate list. A device, which may be, for example, an encoder device and/or decoder device, may be configured to determine for a current block, a plurality of candidate block vectors. The device may determine, for each of the plurality of candidate block vectors, a respective template matching cost. The device may determine, from the plurality of candidate block vectors, a block vector with a best template matching cost and may store the block vector with the best template matching cost for decoding a second block. The device may determine to store the block vector or condition that the current block is coded with IBC mode.

**FIG. 13**

EP 4 633 160 A1

## Description

### BACKGROUND

Video coding systems may be used to compress digital video signals, e.g., to reduce the storage and/or transmission bandwidth needed for such signals. Video coding systems may include, for example, block-based, wavelet-based, and/or object-based systems.

### SUMMARY

Systems, methods, and instrumentalities are disclosed for determining whether to store a best-by-cost block vector (BV) in a list of candidates such as, for example, an intra-block copy (IBC) merge and advanced motion vector prediction (AMVP) candidate list.

A device, which may be, for example, an encoder device and/or decoder device, may be configured to determine for a current block, a plurality of candidate block vectors. The current block may be coded with IBC mode. The device may determine, for each of the plurality of candidate block vectors, a respective template matching cost. The device may determine, from the plurality of candidate block vectors, a block vector with a best template matching cost and may store the block vector with the best template matching cost for decoding a second block.

The device may select a block vector for the current block from the plurality of candidate block vectors and may store the block vector selected for the current block in addition to the block vector with the best template matching cost.

The device may select a block vector for the current block from the plurality of candidate block vectors, wherein the stored block vector with the best template matching cost is different from the block vector selected for the current block.

The device may add the block vector with the best template matching cost to a block vector candidate list associated with the second block. The candidate list may be one of an IBC merge and advanced motion vector prediction (AMVP) candidate list (IBC merge/AMVP candidate list) or an intra template matching prediction (ITMP) candidate list (ITMP candidate list).

The device may be configured to obtain a combined block vector based on the stored block vector with the best template matching cost and the block vector selected for the current block. The device may store the combined block vector. The device may add the combined block vector to a block vector candidate list associated with the second block. The candidate list may be one of an IBC merge/AMVP candidate list or an ITMP candidate list.

The device may be configured to determine that the current block is coded with IBC mode. The device may determine to store the block vector with the best template matching cost based on determining the current block is coded with IBC mode.

The device may determine that the current block is coded with IBC mode and reordering of IBC candidates is enabled. The device, on a condition that the current block is coded with IBC mode, and reordering of IBC candidates is enabled, may reorder the plurality of candidate block vectors based on respective associated template matching costs. The device may select the block vector based on the order of the plurality of candidate block vectors.

The device may determine for a second block coded with ITMP mode, a second plurality of candidate block vectors. The device may determine for each of the second plurality of candidate block vectors a respective template matching cost and may determine, from the second plurality of candidate block vectors, a second block vector with the best template matching cost. The device may add the second block vector with the best template matching cost to at least one block vector candidate list associated with a third block. The at least one block vector candidate list may be an IBC merge and AMVP (IBC merge/AMBVP) candidate list.

Systems, methods, and instrumentalities described herein may involve a decoder. In some examples, the systems, methods, and instrumentalities described herein may involve an encoder. In some examples, the systems, methods, and instrumentalities described herein may involve a signal (e.g., from an encoder and/or received by a decoder). A computer-readable medium may include instructions for causing one or more processors to perform methods described herein. A computer program product may include instructions which, when the program is executed by one or more processors, may cause the one or more processors to carry out the methods described herein.

### BRIEF DESCRIPTION OF THE DRAWINGS

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 illustrates an example video encoder.

FIG. 3 illustrates an example video decoder.

FIG. 4 illustrates an example of a system in which various aspects and examples may be implemented.

FIG. 5 illustrates an example of an intra template matching search area.

FIG. 6 illustrates an example of a sparse search and a refinement search in an ITMP process.

FIG. 7 illustrates an example intra template matching prediction (ITMP) process.

FIG. 8 illustrates an example auto relocated block vector prediction (AR-BVP) derivation process.

FIG. 9 illustrates example reference region(s) for intra block copy (IBC).

FIG. 10 illustrates example reference region(s) for IBC.

FIG.11 illustrates an example AR-BVP derivation process.

FIG. 12 illustrates example five positions in a block related to AR-BVP.

FIG. 13 illustrates an example of padding candidates for replacement of a zero-vector in an IBC list.

## DETAILED DESCRIPTION

A more detailed understanding may be had from the following description, given by way of example in conjunction with the accompanying drawings.

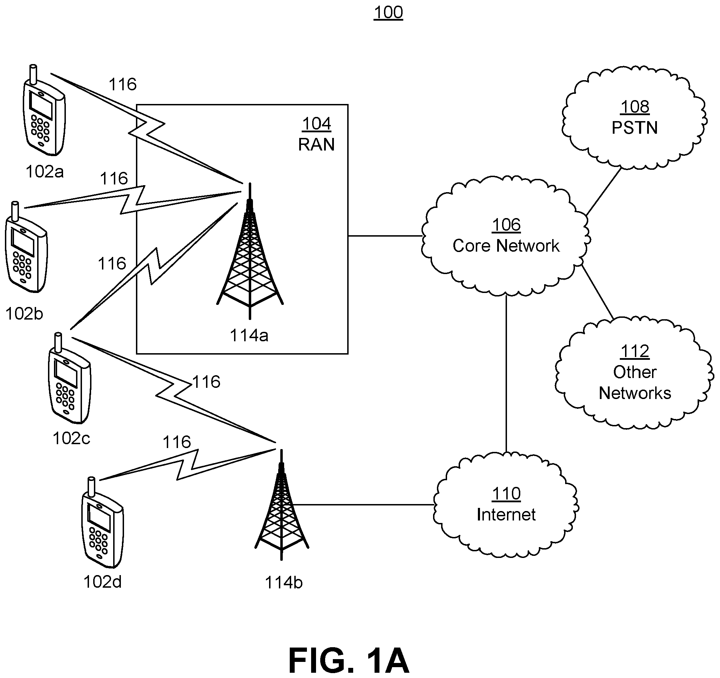

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

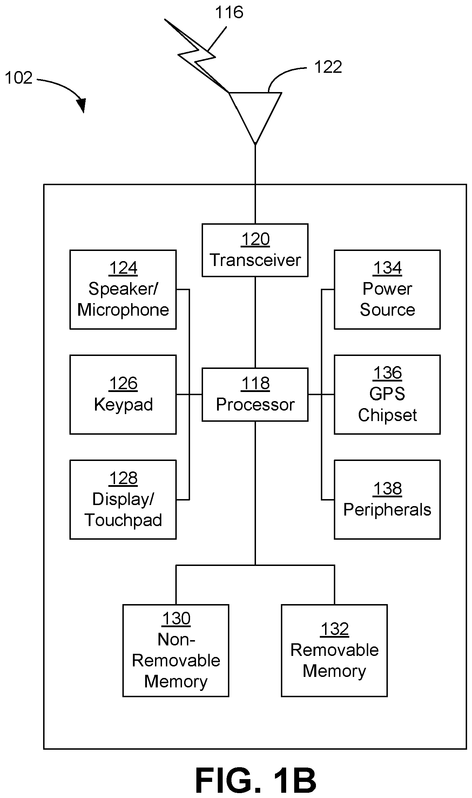

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

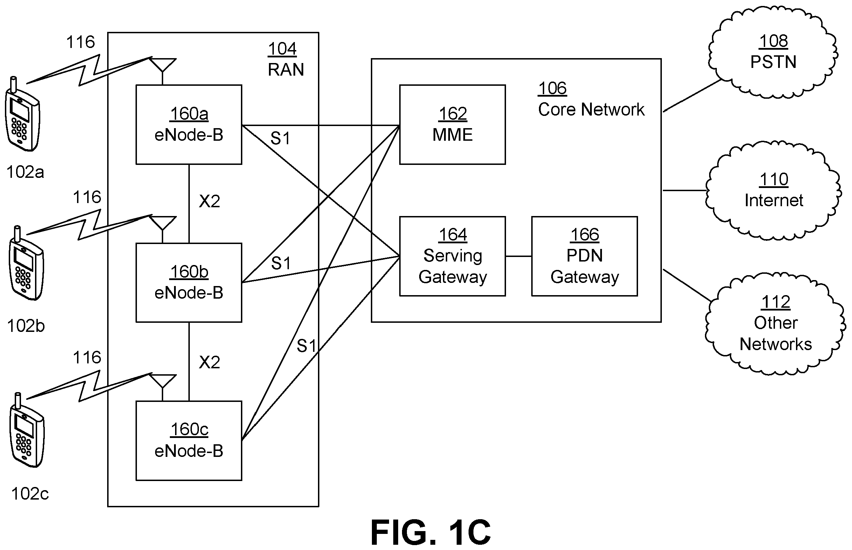

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11 ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11 af and 802.11 ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11 ac, 802.11 af, and 802.11 ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

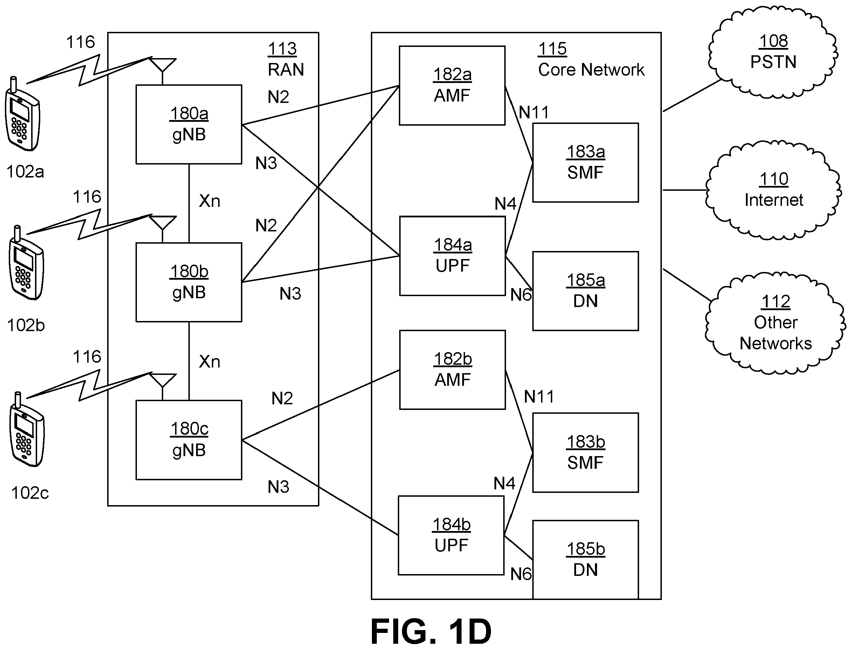

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the ON 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, ON 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may perform testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

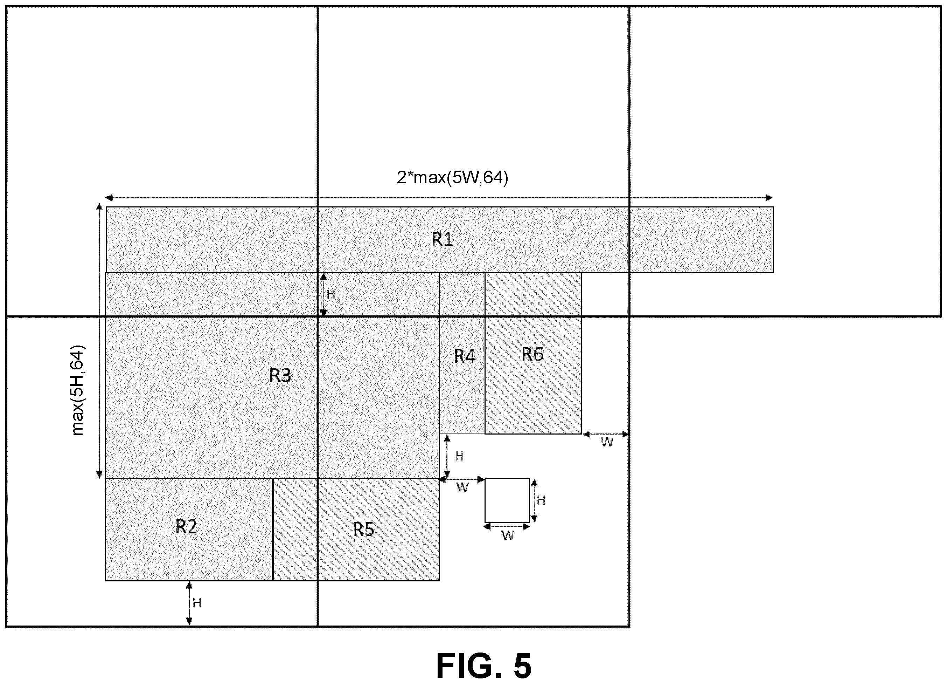

The aspects described and contemplated in this application may be implemented in many different forms. FIGS. 5-13 described herein may provide some examples, but other examples are contemplated. The discussion of FIGS. 5-13 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various examples to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

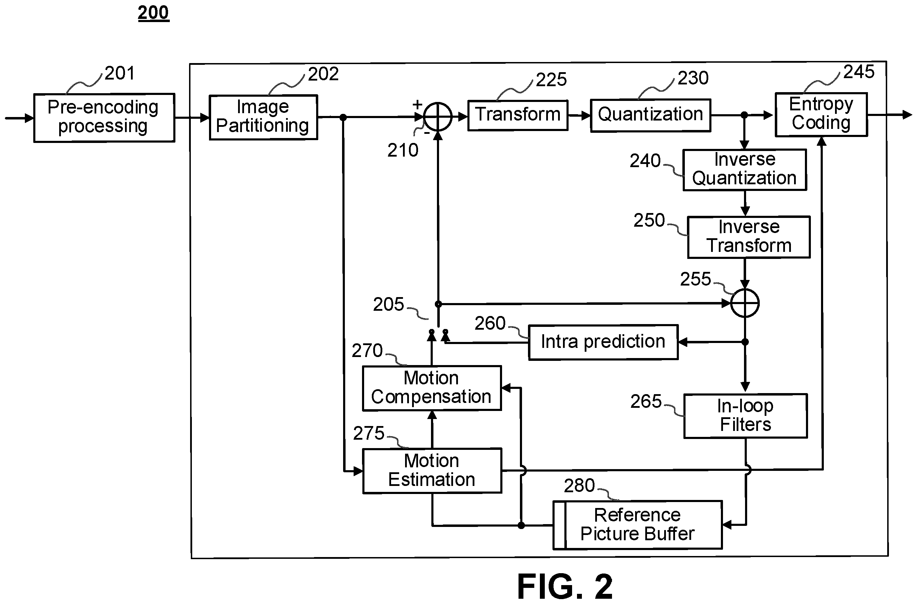

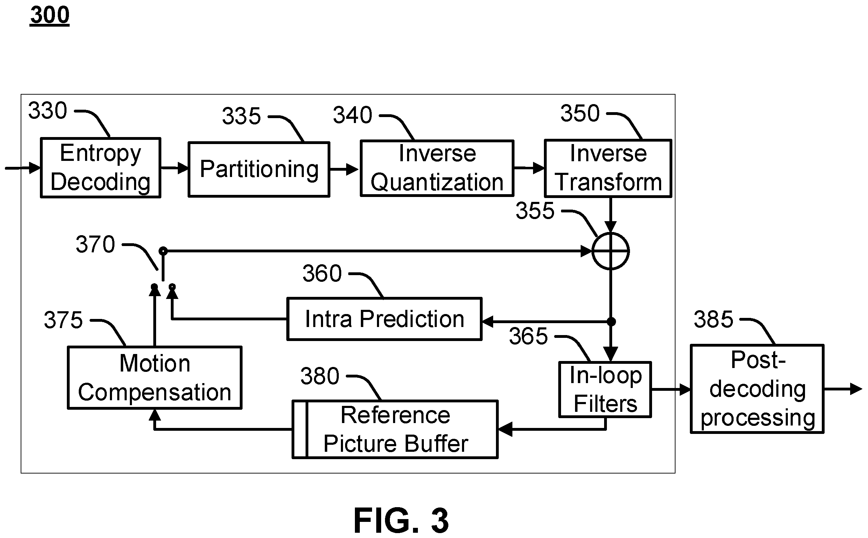

Various methods and other aspects described in this application may be used to modify modules, for example, decoding modules, of a video encoder 200 and decoder 300 as shown in FIG. 2 and FIG. 3. Moreover, the subject matter disclosed herein may be applied, for example, to any type, format or version of video coding, whether described in a standard or a recommendation, whether pre-existing or future-developed, and extensions of any such standards and recommendations. Unless indicated otherwise, or technically precluded, the aspects described in this application may be used individually or in combination.

Various numeric values are used in examples described the present application, such as cost of template matching, combined vector values, average vector values, sum vector values, chroma format (e.g., 4:2:0, 4:2:2, 4:4:4), block sizes or coding unit sizes (e.g., height, width), partition dimensions, number of search areas, number of sub areas or regions, search step sizes, number of reconstructed blocks, number of entries in a list, precision, number of directions, number of modes, number of candidates, number of samples, number of references, bit values, sub-block sizes, number of parameters, flag values, multiplier values, constant values, range values, minimum values, maximum values, threshold values, index values, refinement sizes, etc. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, such as picture partitioning information, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filtering) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, prediction modes, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380). In some examples (e.g., for a given picture) the contents of the reference picture buffer 380 on the decoder 300 side may be identical to the contents of the reference picture buffer 280 on the encoder 200 side (e.g., for the same picture).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream. In an example, the decoded images (e.g., after application of the in-loop filters (365) and/or after post-decoding processing (385), if post-decoding processing is used) may be sent to a display device for rendering to a user.

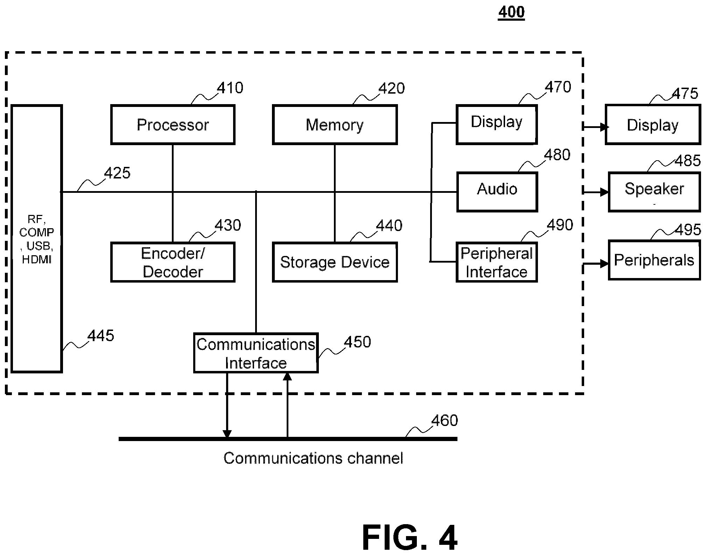

FIG. 4 is a diagram showing an example of a system in which various aspects and examples described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which may be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth® network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal may be provided via dedicated output connections, including, for example, HDMI ports, USB ports, or COMP outputs.

The examples may be carried out by computer software implemented by the processor 410 or by hardware, or by a combination of hardware and software. As a non-limiting example, the examples may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application, for example, determining for a current block, a plurality of candidate block vectors, determining for each of the plurality of candidate block vectors a respective template matching cost, determining, from the plurality of candidate block vectors, a block vector with a best template matching cost, and storing the block vector with the best template matching cost for decoding a second block, etc.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application, for example, determining for a current block, a plurality of candidate block vectors, determining for each of the plurality of candidate block vectors a respective template matching cost, determining, from the plurality of candidate block vectors, a block vector with a best template matching cost, and storing the block vector with the best template matching cost for decoding a second block, etc.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, such as itmp_idx, intra_tmp_idx, intra_tmp_flag, intra_tmp_fusion_flag, intra_tmp_fusion_idx, intra_tmp_lic_flag, intra tmp sub_pel_precision idx, intra_tmp_sub_ie_direction_idx are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. Encoder signals may include, for example, residual signals, metadata, coding or motion representation modes and related signals (e.g., ITMP-related flags, LIC-related flags), partitioning modes, reference pictures, motion vector predictors (MVPs), motion vector differences (MVDs), indices, candidate lists, etc. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various examples. It is to be appreciated that signaling may be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on, or accessed or received from, a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

Systems, methods, and instrumentalities are disclosed for determining whether to include a best-by-cost block vectors (BV) in a list of candidates such as, for example, an intra-block copy (IBC) merge and advanced motion vector prediction (AMVP) candidate list. A device, which may be, for example, an encoder device and/or decoder device, may be configured to determine for a current block, a plurality of candidate block vectors. The device may determine, for each of the plurality of candidate block vectors, a respective template matching cost. The device may determine, from the plurality of candidate block vectors, a block vector with a best template matching cost and may store the block vector with the best template matching cost for decoding a second block. The device may determine to store the block vector on condition that the current block is coded with IBC mode.

Intra template matching prediction (ITMP), an intra prediction mode, may include copying the best prediction block from a reconstructed part of a current frame, whose L-shaped template matches the current template. For a predefined search range, the encoder may search for the most similar template as the current template in the reconstructed part of the current frame and may use a corresponding block as a prediction block. The encoder may signal the use of ITMP to the decoder. The same prediction operation may be performed at the decoder side.

A prediction signal may be generated by matching the L-shaped, top-only, or left-only causal neighbor of a current block with another block in a predefined search area, for example, as illustrated by FIG. 5. FIG. 5 illustrates an example of an intra template matching search area. There may be multiple (e.g., 6) predefined search areas, such as R1 to R6 shown in FIG. 5, which may include reconstructed samples from the top and left CTUs as well as part of the reconstructed samples within the current CTU that may be located above, to the left of, to the bottom-left of, and to the top-right of the current block.

A sum of absolute differences (SAD) may be used as a cost function for ITMP.

Given a search order of the multiple (e.g., 6) regions utilized, such as, e.g., R4, R5, R6, R1, R2, and R3, a decoder may construct a candidate list of template matching block vectors (e.g., up to 19 such vectors) that may be ranked (e.g., in an ascending order) according to a template cost (e.g., calculated based on a SAD). One or more of the following modes may be supported for ITMP.

A single predictor mode may be supported in which a single predictor may be selected from the candidate list. A fusion of multiple predictors mode may be supported in which multiple predictors may be blended to derive a final prediction block. The blending weights may be computed based on the template matching cost of each predictor, or using a suitable weight derivation method (e.g., a Wiener-filter based weight derivation method). A sub-pel precision mode may be supported in which, if a single predictor is used, a sub-pel precision may be used with a 1/2-pel precision, a 1/4-pel precision and/or a 3/4-pel precision, each with multiple (e.g., 8) possible directions. A linear filter model mode may be supported in which a linear filter may be learned between a reference template and the current template. The linear filter may be applied to the reference block. A linear filter model mode may be used for a single predictor, for example, when sub-pel precision is not used. ITMP may be used in combination with LIC (e.g., ITMP-LIC), with DIMD (e.g., ITMP-DIMD) and/or with SGPM (e.g., ITMP-SGPM),

The dimensions of one or more (e.g., all) regions may be defined by SearchRange_w, SearchRange_h, which may be set proportional to the block dimension (BlkW, BlkH) to have a fixed number of SAD comparisons per pixel, for example, based on the following:

$$SearchRange\_w = \min (64, a * BlkW)$$

$$SearchRange\_h = \min (64, a * BlkH)$$

where 'a' may be a constant that controls the gain/complexity trade-off (e.g., 'a' may be equal to 5).

The complexity of ITMP may be proportional to a template matching process, where the difference between the templates of a current block and of a predicted block may be computed for a (e.g., each) position within the available search range. The search range of one or more (e.g., all) search regions may be subsampled by a factor (e.g., a factor of 3), for example, to speed up a template matching process (e.g., such a technique may be referred to as a sparse search). For example, during a search, every third position in a horizontal and/or vertical direction may be considered in the first step of the search. A refinement process may be performed after the first step is finished. In a refinement process (e.g., all) positions within the sparse search may be checked and their template cost may be calculated. The refinement may be performed via a second template matching search around the best match (e.g., or around several best candidates from a sparse search), for example, with a reduced range.

ITMP may be enabled for one or more (e.g., certain) CUs (e.g., CUs with a size less than or equal to 64 pixels in width and/or height). The CU size (e.g., maximum CU size) for Intra template matching may be configurable.

The use of ITMP may be signaled at a CU level, for example, through a dedicated flag and/or if decoder-side intra mode derivation (DIMD) is not used for a current CU. For example, an inference may be drawn that other intra modes are unused if ITMP is used.

ITMP may be used for natural and/or screen content.

Multi-candidate ITMP may be performed in which a candidate list may be constructed with candidate block vectors (BVs) ranked in an ascending order based on their template matching costs. The index of a selected candidate may be signaled in a bitstream.

Additional ITMP modes may be performed, including, for example, a left template mode and/or an above template mode (e.g., besides the L-shape mode described herein). The left template mode and/or the above template mode may use (e.g., only use) the left side or above side of a current prediction unit (PU) to derive a template matching candidate. Different templates may be used in the matching process.

In some examples, a candidate list may be constructed for ITMP with candidate BVs ranked in ascending order of their template matching costs. The index of selected candidate may be signaled in video data (e.g., in the bit-stream).

In some examples, ITMP may select a (e.g., only one) BV that has the smallest template matching cost and there may not be additional signaling (e.g., the same process may be performed on the encoder and decoder sides, hence no additional signaling may be performed to indicate the final predictor). In some examples (e.g., such as for camera captured content), it may be difficult for the decoder to find a perfect match, such as when multiple blocks are similar to the current block and their respective template matching costs are close. The BV candidate with the smallest template matching cost may not be the best predictor.

In some examples, ITMP may use multiple candidate BVs. A candidate list may be constructed. Candidate BVs on the list may be ranked in an ascending order based on their template matching costs. An index may be signaled in a bit-stream to indicate which candidate BV is used for the current block. Such an approach may utilize template matching to select a short list of promising candidates from a large number of possible BVs. The encoder, which may refer to the original current block, may decide on which BV to use. An example of simplified syntax associated with this approach may be as shown in Table 1:

Table 1 - Example of simplified syntax

| ... |
| --- |
| intra_tmp_flag |
| if(intra_tmp_flag) { |
|    intra_tmp_idx |
| } |
| ... |

An intra_tmp_flag may be equal to one (1), for example, if the current block uses ITMP. An intra tmp_idx may indicate which BV in a candidate BV list may be used to identify a prediction block.

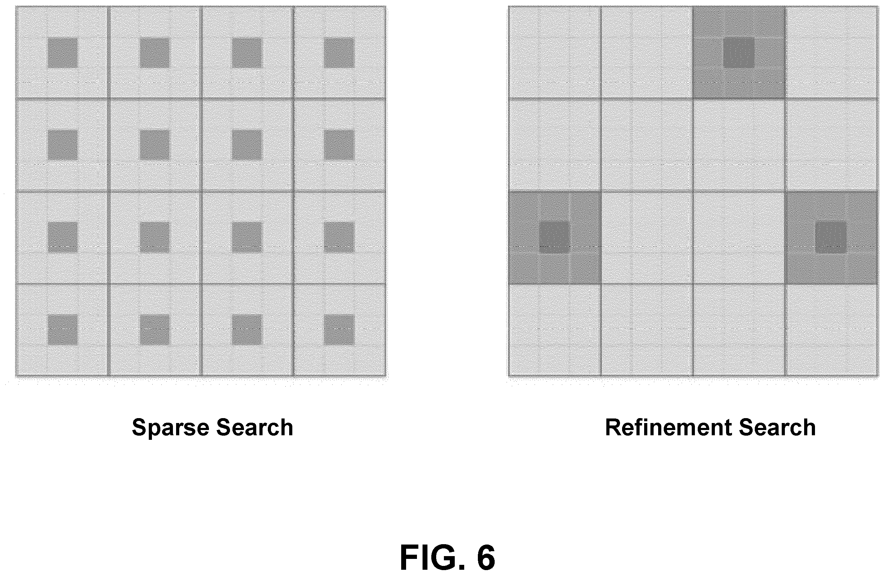

A candidate list (e.g., a sparse candidate list) may be built based on a sparse search and/or a refinement search, which may be performed, for example, as illustrated in FIG. 6. FIG. 6 illustrates an example of a sparse search and a refinement search in an ITMP process. In an example of a sparse search, a sub-sampling factor may be set. For example, based on a fact of three (3), every third position in horizontal and vertical direction may be tested, e.g., in a first step (e.g., the sparse search). A number of (e.g., 30) top BVs may be maintained based on their template matching costs. In a second step (e.g., a refinement search), a (e.g., each) 3x3 block around one or more (e.g., each) of the top (e.g., 30) BVs may be tested. The 3x3 refinement may respect the boundaries of a region. The refinement candidates of a selected candidate within the region may (e.g., must) stay within the region. A number of (e.g., 19) top BVs may be selected to form a candidate list. One of the candidates may be selected (e.g., by an encoder) as a final predictor. An index for the final predictor may be signaled (e.g., by an encoder to a decoder).

ITMP syntax may be coded or decoded, for example, if a DIMD flag is set to false and/or if an ITMP sps flag is set to true, as illustrated by example in Table 2:

Table 2 - Example of ITMP syntax

| ... |
| --- |
| intra_tmp_flag |
| if(intra_tmp_flag) { |
|    intra_tmp_fusion_flag |
|    if(intra_tmp_fusion_flag) { |
|       intra_tmp_fusion_idx |
|       intra_tmp_lic_flag |
|    } else { |
|       intra_tmp_idx |
|       intra_tmp_filter_flag |
|       if(!intra_tmp_filter_flag) { |
|          intra_tmp_lic_flag |
|       } |
|       if(!intra_tmp_filter_flag and !intra_tmp_lic_flag ) { |
|          intra_tmp_sub_pel_precision_idx |

(continued)

| if(intra_tmp_sub_pel_precision_idx != 0) { |
| intra_tmp_sub_pel_direction_idx |
| } |
| } |
| } |
| } |
| ... |

An intra_tmp_flag may indicate whether the intra prediction type for a current block is IntraTMP. An intra_tmp_fusion_flag may indicate whether fusion is used for the current block. An intra_tmp_fusion_idx may specify the candidate set used for IntraTMP fusion (e.g., the range of intra_tmp_fusion_idx may be 0 to 2). An intra_tmp_fusion_idx may be used to indicate one of multiple (e.g., three) candidate sets {BV0 to BV4}, {BV5 to BV9}, {BV10 to BV14}. An intra tmp_lic flag may indicate whether ITMP with LIC is used. An intra_tmp_idx may specify the index of a BV in the candidate list used for the current block (e.g., the range of intra_tmp_idx may be 0 to 18 and/or for candidates from an L-shape template, the top template and the left template may be included in the same candidate list). An intra_tmp_sub_pel_precision_idx may specify a precision index for the current block (e.g., the range of intra_tmp_sub_pel_precision_idx may be 0 to 3, which may be used to indicate integer-pel precision, 1/2-pel precision, 1/4-pel precision and 3/4-pel precision, respectively). An intra_tmp_sub_pel_direction_idx may specify a sub-pel direction index for the current block (e.g., the range of intra_tmp_sub_pel_phase_idx may be 0 to 7).

ITMP search process may be modified by adding more candidates to the ITMP search process (e.g., utilizing block vectors of one or more surrounding blocks of a current block).

In the ITMP mode, a template matching search process within pre-defined search regions may be performed to obtain multiple (e.g., up to 19) candidate block vectors. In some examples, the ITMP template matching search may skip the block vector information of one or more neighboring PUs of a current block. The ITMP template matching search process may be augmented with additional (e.g., new) candidates, such as, for example, one or more block vectors associated with the neighboring PUs that may be coded with an IBC (Intra Block Copy) mode or ITMP mode. The additional candidates may be referred to herein as ITMP merge candidates. The additional candidates may improve the ITMP mode by providing more probable candidates to the ITMP search process. For example, some other implementations of the ITMP mode may not explore block vectors from neighboring blocks even though they may be more correlated with the properties of the current block. An ITMP candidate list may be expanded to include the additional candidates block vectors (e.g., ITMP merge candidates).

In some examples (e.g. if a neighboring CU is ITMP coded), a flag may be signaled to indicate the current CU copies the same ITMP information from the neighboring CU.

In examples, the inclusion of ITMP merge candidates may involve testing the BV(s) from a (e.g., typical) ITMP search range (e.g., inside the search range depicted in FIG. 5) and/or the BV(s) outside of a (e.g., typical) ITMP search range (e.g., outside the search range depicted in FIG. 5). This approach may be similar to the IBC merge mode, where a merge index may be coded to indicate which neighboring PU block vector is selected. A PU coded in the IBC merge mode may utilize already selected block vectors of one or more neighboring PUs (e.g., IBC or ITMP-coded PUs may be considered), which may be better correlated with the current PU. In some implementations of the IBC merge mode, ITMP block vectors may be used as IBC merge candidates, but not the other way around, which may impose a limitation on the ITMP process. Therefore, using information associated with one or more neighboring PUs may be utilized for performing a template matching search for ITMP, which may lead to improved performance. A template matching cost process to rank additional (e.g., new) candidates among the already computed candidates (e.g., such as those coming from the sparse search) may be used.

In examples, the same merge candidate list used for IBC may be considered for ITMP. The list may include local and non-local neighboring candidates (e.g., there may be up to 25 local and non-local PUs that may be considered while selecting a merge candidate). The processing order of neighboring CUs may be the same as for the IBC merge mode. A block vector found within a local or non-local neighborhood of the current PU may be added to the current ITMP candidate list. For example, the block vector may be added after the sparse candidates identified during the first step (e.g., sparse search) of the candidate selection process (e.g., the block vector may be concatenated to the end of the sparse search candidate list or sparse candidate list). A pre-defined number of (e.g., up to 25) merge candidates may be added. The respective template costs associated with the merge candidates may be obtained, for example, in the same way as for the sparse candidates. The merge candidates may be ranked together with the other candidates (e.g., the sparse candidates).

A pre-defined number of the top (e.g., 30) candidates may be selected for further refinement. Hence, by using the ITMP merge candidates, the top (e.g., 30) candidates may include some candidates that are not part of the sparse search.

The top (e.g., 30) candidates may be refined with a second template matching step (e.g., a refinement search process). In examples, the refinement search process for a candidate that is from the list of merge candidates may be different than for those candidates that are from the sparse search. For example, instead of using 3x3 refinement around a selected point, an 11x11 refinement may be used if the candidate is from the merge list.

Candidates (e.g., all candidates) tested in the refinement process may be ranked. A list of (e.g., final 19) candidates may be selected. A (e.g., one) candidate from the list (e.g., of 19) may be selected by an encoder (e.g., during a rate-distortion process). The index of the selected candidate (e.g., index of the candidate on the list) may be signaled (e.g., to a decoder).

Other aspects of the encoding/decoding process for the ITMP CU may be performed, for example, after a set of ITMP predictor candidates for an ITMP CU is obtained using the techniques described herein. For example, the predictor indicated by an ITMP index may be selected. A residual block of the CU may be encoded/decoded based on the selected predictor (e.g., the residual block may be added to the prediction block, resulting in a reconstructed CU at the decoder side).

The techniques described herein may expand an ITMP candidate list with additional (e.g., new) BVs that may not have been previously checked during the ITMP process. The additional BVs may include IBC block vectors, whose search region may be larger than ITMP BVs. The additional BVs may include candidates that may not otherwise be selected in a first pass of template matching (e.g., during a sparse search of subsampled regions). The additional BVs may be better correlated with the current block, e.g., as they may have been selected previously for predicting nearby blocks.

The compression efficiency of a video encoder and decoder (codec) with respect to coding video blocks of the ITMP mode may be improved by adding more merge candidates that may be inherited from neighboring PUs. In some examples (e.g., if a neighboring PU is coded in bi-IBC mode) BVs (e.g., both BVs) may be included in the ITMP merge list. Otherwise (e.g., if the neighboring PU is not coded in bi-IBC mode), a uni-IBC BV may be included in the ITMP merge list.

In some examples (e.g., if a neighboring PU is coded in ITMP mode and intra tmp_idx > 0), a BV that is selected for the PU and a best-by-cost ITMP candidate may be included in the ITMP merge list. The selected and best-by-cost BVs may be the same, for example, if intra_tmp_idx is equal to 0, in which case one or the other candidate may be included in the ITMP list.

In some examples, N out of M available merge candidates (e.g., only N out of M available merge candidates) may be used, for example, if M>N. Merge candidates outside the ITMP search range may be prioritized. In some examples, M ITMP merge candidates may be selected (e.g., M can be up to 50). In some examples, N merge candidates may be used at the end (e.g., N=10) for testing and comparison with other candidates.

A sampling factor increase (e.g., from 3 to 4) may (e.g., slightly) change a refinement process (e.g., instead of a 3x3 refinement, a refinement process may use two lines on the left, two lines on the top, 1 line on the right, and one line on the bottom).

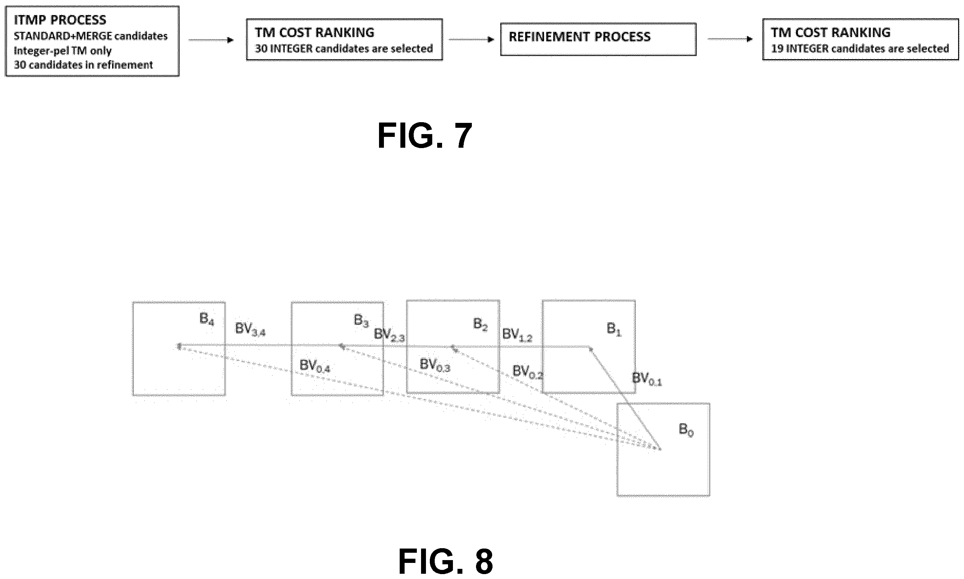

In some examples, a BV refinement range may be reduced (e.g., in LIC case) and/or fewer BV candidates issued from a sparse search may be kept in LIC compared to some implementations (e.g., regular ITMP). FIG. 7 illustrates an example ITMP process.

The performance of ITMP with merge candidates may be referred to herein as an ITMP merge mode. An ITMP search process may be improved or optimized, and its complexity may be reduced. One or more bi-prediction IBC candidates may be included in an ITMP merge list. One or more best-by-cost ITMP candidates may be included in the ITMP merge list. A subset of available merge candidates (e.g., N out of M available merge candidates) may be used (e.g., if M>N). IBC candidates may be prioritized. Merge candidates outside an ITMP search range may be prioritized. A refinement (e.g., 3x3 refinement) may be performed, for example, if a merge candidate is inside an ITMP search region. The cost and/or position of already tested template matching candidates may be stored (e.g., cached in memory) to skip repetitive template matching cost calculations.

Optimized refinement may be performed, for example, if a merge candidate is outside ITMP search region. In examples, multiple (e.g., 25) candidates associated with the neighboring PUs of a current CU may be added to an ITMP merge list. The candidates may be added in a way and/or in an order that may be similar to (e.g., the same as) candidates for an IBC merge mode (e.g., the candidates may be selected BVs associated with already processed PUs). Such an ITMP merge list may be further expanded, for example, by adding more candidates from blocks coded in the IBC or ITMP mode.

In examples (e.g., if a neighboring PU is coded in a bi-prediction IBC mode), multiple (e.g., two) BVs (e.g., instead one BV) from the bi-prediction IBC mode may be used and added to an ITMP merge list (e.g., the two BVs may be associated with a PU coded in the bi-Prediction IBC mode).

In examples, bi-predicted merge candidates may not include multiple (e.g., two) different ITMP prediction candidates associated with a PU. ITMP prediction may include a bi-prediction candidate. The sorting of bi-predictive candidates may be performed, for example, by computing the template matching (TM) cost of a bi-predictive candidate as the average TM cost of (e.g., two) uni-predictive BVs that the bi-prediction combines.

In some examples (e.g., if a neighboring PU is coded in the ITMP mode), a BV selected for a neighboring PU may be added to an ITMP merge list. The BV selected for the PU may be added to the list. The BV may be indicated by an ITMP index (e.g., intra tmp_idx) signaled in a bitstream, for example. As described herein, the BV may or may not be the one with the smallest template cost. The BV with the smallest template cost (e.g., this may be the first candidate on a final candidate list, for example, with intra tmp_idx equal to 0) may be included, for example, if intra_tmp_idx is larger than 0.

One or more of the candidate selection techniques described herein may be combined. For example, one or more bi-prediction IBC candidates and an ITMP best candidate by template costs may be added to an ITMP merge list of candidates, e.g., besides those already defined herein.

An ITMP merge list may be expanded (e.g., to include up to 50 candidates), for example, by using one or more of the techniques described herein. The expanded list of candidates may be used in the same way as a shorter list (e.g., include up to 25 neighboring candidates).

Operations associated with the construction of an ITMP merge candidate list may be optimized. In examples, up to 50 candidates may be added as ITMP merge candidates. The increased number of candidates may lead to improved coding performance but may cause computational costs to increase. A pre-selection of ITMP merge candidates may be applied, for example, to maintain the computational cost within reasonable limits. The pre-selection may be applied prior to template cost calculations (e.g., some candidates may be discarded prior to template matching cost computations in order to reduce complexity). The pre-selection may be applied in a way that does not degrade the coding gains compared to using the expanded list of candidates (e.g., all 50 candidates) while still achieving complexity reduction.

In examples, a subset of (e.g., N out of M) available merge candidates may be used (e.g., M>N). For example, there may be a total of M ITMP merge candidates available for a current CU (e.g., M may be less or equal to 50). Instead of using all M candidates, which may increase the computational complexity of an encoder and/or a decoder, the number of merge candidates may be limited to N (e.g., N=5). The value of N may be preconfigured. If M>N, the ITMP merge candidate list may be shortened to N (e.g., the first N candidates on the original list may be kept on the ITMP merge list and the others may be discarded). If M<=N, all M available candidates may be used.

In examples, the ITMP merge list may be populated in a way that multiple (e.g., all) available neighboring IBC merge candidates may be added to the list first (e.g., including uni-prediction BV(s) and bi-direction BV(s), if available), followed by one or more ITMP candidates, e.g., if available. The list of candidates may (e.g., then) be shortened, for example, as described herein (e.g., by selecting the first N candidates on the list). The IBC candidates may (e.g., therefore) be prioritized when constructing and preselecting ITMP candidates (e.g., N candidates).

In examples, ITMP merge candidates located outside of an ITMP search region (e.g., as shown in FIG. 5) may be prioritized when constructing an ITMP merge list, for example, regardless of whether the candidates come from an IBC or ITMP coded neighboring block. The ITMP merge candidate list may be populated in this way. The list may (e.g., then) be shortened or clipped. For example, ten candidates may be preselected.

In examples, early termination of ITMP merge list construction may be applied (e.g., in all cases) when the list is to be shortened (e.g., to N candidates). For example, when N candidates have been added to the list using one or more of the techniques described herein, the construction process may be terminated without getting other ITMP merge candidates, and the N candidates may be used (e.g., as described herein).

In examples, refinement operations applied to candidates derived from a sparse search may be different than refinement operations applied to candidates derived from an ITMP merge list. For example, 3x3 refinement may be applied to candidates derived from the sparse search (e.g., as a first step of the search process) and 11x11 dense refinement may be applied to candidates selected during the first step from ITMP merge candidates (e.g., dense refinement may mean that each candidate within a 11x11 window may be tested). The 11x11 dense refinement may be too complex in view of the computational capabilities of some encoders/decoders.

In examples, 3x3 refinement may be performed for an ITMP merge candidate if the candidate is located within an ITMP search region (e.g., one of the regions illustrated in FIG. 5) while 11x11 refinement may be performed for a merge candidate located outside the ITMP search region (e.g., regardless of whether the candidate comes from an IBC block or an ITMP block).

In examples, ITMP merge candidates associated with an IBC block may use the 11x11 refinement process while ITMP merge candidates associated with an ITMP neighboring block may use the 3x3 refinement process (e.g., regardless of the position of the block relative to an ITMP search region).

Search window sizes described herein (e.g., the 3x3 and 11x11 search window sizes) are examples. They may refer generally to small and large refinement windows, where one may add acceptable computational complexity to the refinement process and the other may add undesirable computational complexity (e.g., the acceptable and undesirable complexity levels may be based on software and/or hardware capabilities). In various implementations, different search window sizes may be used.

FIG. 8 shows an example AR-BVP derivation process. IBC and/or ITMP list may include an auto relocated block vector prediction (AR-BVP). AR-BVP can be derived as a guiding BV plus a BV of a reference block, located by the guiding BV. The initial guiding BV may be set to an existing BVP in IBC and/or ITMP candidate list.

As shown in Figure 4, a guiding block vector BV0,1 associated with the current block B0 may point to a reference block B1. If B1 has a BV denoted as BV1,2 pointing to a reference block B2, then BV0,2, given by BV0,2 = BV0,1 +BV1,2, may be defined as the AR-BVP, guided by BV0,1. Similarly, BV0,n+1 can be derived by using next formula BV0,n+1 = BV0,n+BVn,n+1 = BV0,1+BV1,2 +...+BVn-1,n +BVn,n+1.

Intra block copy (IBC) may be performed to exploit the similarity, e.g. repeating patterns, within the same picture. For example, a current CU may be predicted by an already reconstructed reference block within the same picture (reference samples are derived from inside the reconstructed part of current picture). The offset from the current block to its reference block may be referred to as a block vector (BV) or displacement vector. For example, a BV may be a vector that indicates the displacement from the current block to a reference block. Merge mode and skip mode may be performed in IBC.

Block matching (BM) may be performed at the encoder to find an optimal BV for each CU. The luma block vector of an IBC-coded CU may be in integer precision. The chroma block vector may be rounded to integer precision. The IBC mode can switch between 1-pel and 4-pel motion vector precisions, for example when combined with adaptive motion vector resolution (AMVR). For example, the IBC mode may be applicable to certain CUs (e.g. the CUs with both width and height smaller than or equal to 64 luma samples). Fractional block vector resolution may be used, e.g. for natural content. IBC is also known as intra picture block compensation or current picture referencing (CPR).

An IBC-coded CU may be treated as the third prediction mode other than intra or inter prediction modes. The IBC mode may be applicable to the CUs with both width and height smaller than or equal to 64 luma samples.

At CU level, IBC mode may be signaled with a flag, and it can be signaled as IBC advanced motion vector prediction (AMVP) mode or IBC merge mode.

In IBC merge mode, a merge candidate index may be used to indicate which of the block vectors in the list is used to predict the current block. The merge list may include spatial, history-based motion vector predictor (HMVP), and pairwise candidates. Auto-relocated block vector prediction (AR-BVP) candidates may be added to the IBC merge and AMVP candidate list right after the HBVP candidates. Template based adaptive reordering (ARMC-TM) is applied to IBC merge list.

In IBC AMVP mode, block vector difference may be coded. The block vector prediction method may use two merge candidates as predictors, which may be picked from the list with minimum cost (if IBC coded). When either neighbor is not available, a default block vector may be used as a predictor. A flag may be signaled to indicate the block vector predictor index. The same list may be as IBC merge mode.

In some examples, the same list may be used for both IBC merge and IBC AMVP mode (IBC merge list and IBC AMVP list). The lists are commonly referred to as IBC merge/AMVP list herein. A candidate from the IBC merge/AMVP list may be referred to as to IBC merge candidate (or merge candidate in this document), or IBC block vector predictor (BVP) or BVP. Both refer to the BV from IBC merge/AMVP list.

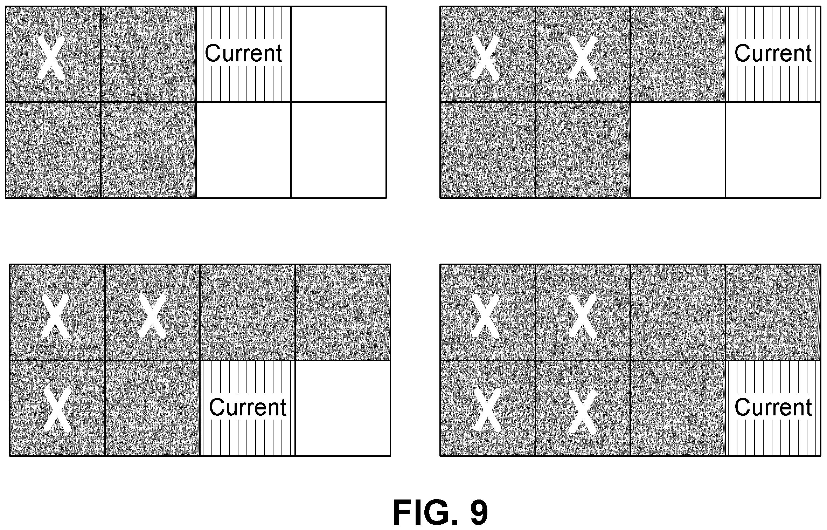

The IBC may consider the reconstructed portion (e.g., only the reconstructed portion) of the predefined area, including the region of the current coding tree unit (CTU) and some region of the left CTU (e.g., to limit memory consumption and decoder complexity). FIG. 9 illustrates the reference region of IBC mode. A block (e.g., each block) in FIG. 9 may represent a 64x64 luma sample unit.

FIG. 9 shows a current CTU processing order and available reference samples in a current and left CTU. The X marks in FIG. 9 illustrate blocks from the left CTU that are excluded from the available reference region. Depending on the location of the current CU location within the current CTU, one or more of the following may apply. If the current block is in (e.g., falls into) the top-left 64x64 block of the current CTU, the current block may refer to the reference samples in the bottom-right 64x64 blocks of the left CTU (e.g., in addition to the already reconstructed samples in the current CTU) using IBC mode. The current block may refer to the reference samples in the bottom-left 64x64 block of the left CTU and/or the reference samples in the top-right 64x64 block of the left CTU (e.g., using IBC mode).

If the current block is in (e.g., falls into) the top-right 64x64 block of the current CTU, then in addition to the already reconstructed samples in the current CTU, if the luma location (0, 64) relative to the current CTU has not yet been reconstructed, the current block can also refer to the reference samples in the bottom-left 64x64 block and bottom-right 64x64 block of the left CTU, using IBC mode; otherwise, the current block can also refer to reference samples in bottom-right 64x64 block of the left CTU.

If the current block is in (e.g., falls into) the bottom-left 64x64 block of the current CTU, and if the luma location (64, 0) relative to the current CTU has not yet been reconstructed, the current block may refer to the reference samples in the top-right 64x64 block and bottom-right 64x64 block of the left CTU (e.g., in addition to the already reconstructed samples in the current CTU) using IBC mode. Otherwise (e.g., if the luma location (64, 0) relative to the current CTU has been reconstructed), the current block may refer to the reference samples in the bottom-right 64x64 block of the left CTU (e.g., using IBC mode).

If the current block is in (e.g., falls into) the bottom-right 64x64 block of the current CTU, the current block may refer (e.g., only refer) to the already reconstructed samples in the current CTU (e.g., using IBC mode). This may allow the IBC mode to be implemented using local on-chip memory for hardware implementations.

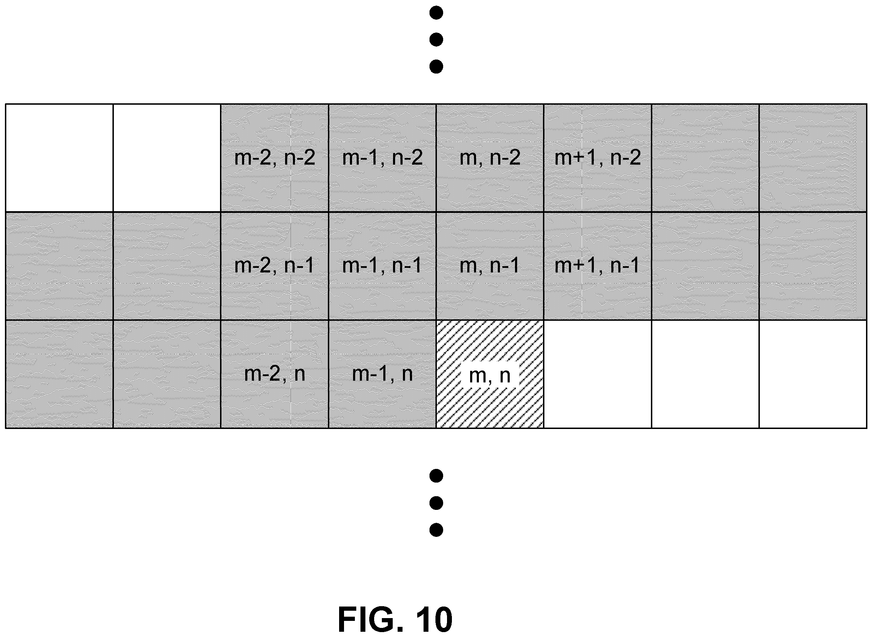

The reference region for IBC may be extended to one or more (e.g., two) CTU rows above the CTU being processed (e.g., by the encoder or the decoder). FIG. 10 illustrates an example extended reference region for IBC. FIG. 10 illustrates the reference area for coding CTU (m, n). For example, for CTU (m, n) to be coded, the reference area may include CTUs with indices (m-2, n-2)... (W, n-2), (0, n-1)... (W, n-1), (0,n)... and (m, n), where W denotes the maximum horizontal index within the current tile, slice, or picture. The per-sample block vector search range (e.g., sometimes referred to as local search range) may be (e.g., may be limited to) [-(C « 1), C » 2] horizontally and [-C, C >> 2] vertically (e.g., to adapt to the reference area extension), where C denotes the CTU size.

For example, in IBC, reference samples may be obtained before applying in-loop filtering.

IBC merge/AMVP list may be constructed. For example, if an IBC merge/AMVP candidate is valid, the IBC merge/AMVP candidate may be inserted into the IBC merge/AMVP candidate list.

Local candidates, such as above-right, bottom-left, and above-left spatial candidates (e.g., belonging to the adjacent spatial candidate category) may be added. A pairwise average candidate may be added into the IBC merge/AMVP candidate list.

History based candidates from HBVP list may be added to the IBC merge/AMVP candidate list. The HMVP table size for IBC may be increased, for example, to 25. After up to 20 IBC merge candidates are derived with full pruning, the candidates reordered together. After reordering, the first 6 candidates with the lowest template matching costs may be selected as the final candidates in the IBC merge/ AMVP list.

Template based adaptive reordering (ARMC-TM) may be applied to the IBC merge list.

Candidates from non-adjacent spatial neighboring blocks (e.g., non-adjacent candidates) may be added to the candidate lists of IBC merge modes and IBC AMVP. The non-adjacent candidates may be inserted between the adjacent spatial candidates and the HBVP candidates for IBC merge and IBC AMVP. The same reference area of non-adjacent merge in inter mode may be reused for the IBC. Such candidates may be referred to as non-local candidates herein.

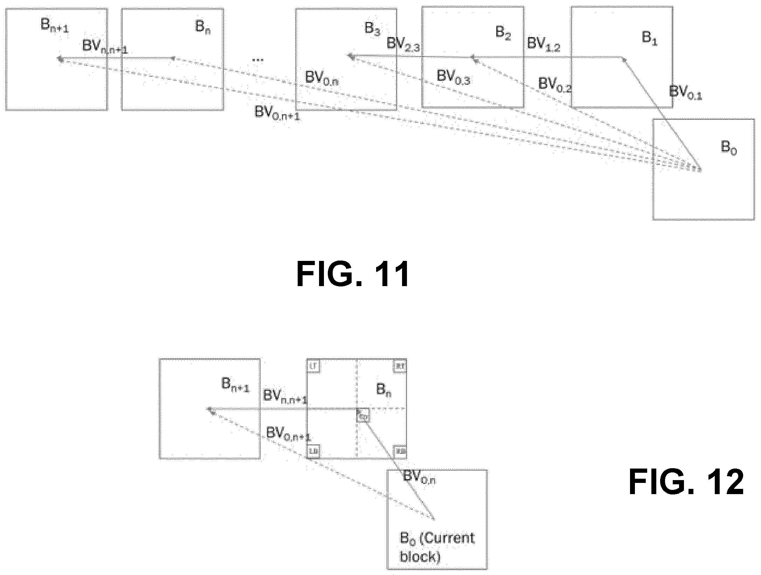

Auto-relocated block vector prediction (AR-BVP) candidates may be added to the IBC merge and AMVP candidate list right after the HBVP candidates. FIG.11 shows AR-BVP derivation process. As shown in FIG.11, a guiding block vector $BV_{0,1}$ (e.g., an existing BVP already in the candidate list) associated with the current block $B_0$ may point to a reference block $B_1$. If $B_1$ has a BV denoted as $BV_{1,2}$ pointing to a reference block $B_2$, then $BV_{0,2}$, given by $BV_{0,2} = BV_{0,1} + BV_{1,2}$, may be identified the AR-BVP, guided by $BV_{0,1}$. FIG. 12 shows example 5 positions in a block related to AR-BVP. As shown in FIG. 12, when deriving $BV_{n,n+1}$ guided by $BV_{0,n}$, all five positions including top-left (e.g., LT), top-right (e.g., RT), center (e.g., Ctr), bottom-left (e.g., LB), and bottom-right (e.g., RB) positions of $B_n$ may be checked to find $BV_{n,n+1}$.

A rule (e.g., restriction) that adjacent spatial candidates cannot be used for IBC merge of a 4x4 CU may be removed.

The zero vectors' candidates to pad the IBC Merge/AMVP list may be replaced with a set of block vector predictor (BVP) candidates located in the IBC reference region. A zero vector may be discarded as BVP in the IBC candidate list, e.g., based on the zero vector being invalid as a block vector in IBC merge mode.

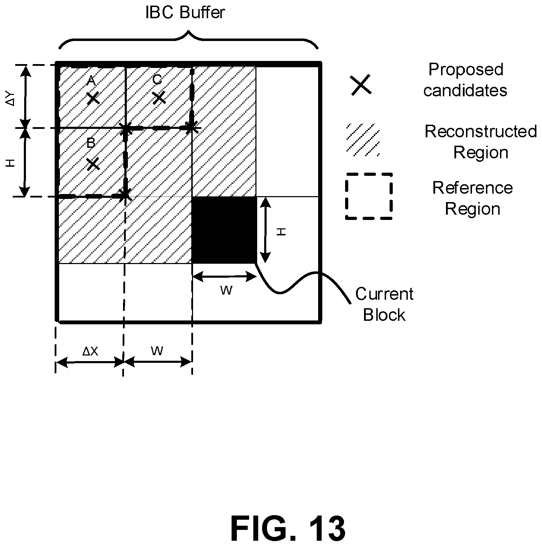

FIG. 13 illustrates an example of padding candidates for replacement of a zero-vector in an intra block copy (IBC) list. Three candidates may be located on the nearest corners of the reference region, and three additional candidates may be determined in the middle of the three sub-regions (A, B, and C), whose coordinates are determined by the width, and height of the current block and the $\Delta X$ and $\Delta Y$ parameters, e.g., as is depicted in FIG. 13.

A bi-predictive IBC may be used to enhance the coding performance of IBC (e.g., for natural and screen content). IBC (e.g., uni-predictive IBC) may generate prediction samples with a BV (e.g., only one BV). The prediction accuracy of IBC may be improved. IBC with more than one (e.g., two) BVs (e.g., bi-predictive IBC) may be used (e.g., instead of uni-predictive IBC). Types (e.g., two types) of bi-predictive IBCs may exist.

In a first example type (e.g., sometimes referred to as IBC BVP-merge mode), a plurality (e.g., two) BVs may be derived from IBC BVP mode and IBC merge mode (e.g., similar to the MV derivation in AMVP-merge mode). Indices (e.g., two different indices) for the IBC BVP mode and the IBC merge candidate may be signaled (e.g., from the encoder to the decoder), which may be different from the AMVP-merge mode.

In a second example type (e.g., sometimes referred to as bi-predictive IBC merge mode), a plurality (e.g., two) BVs may be derived from the IBC merge candidate list. IBC merge indices (e.g., two different IBC merge indices) may be used to signal the BVs (e.g., from the encoder to the decoder). The target of the bi-predictive IBC merge mode may include IBC-regular merge and IBC merge mode with block vector difference (IBC-MBVD) and IBC-GPM. In the bi-predictive IBC merge mode, bi-predictive IBC-MBVD may be enabled in natural and screen content. Bi-predictive IBC-GPM may be enabled in (e.g., only in) screen content.

Feature(s) associated with merge candidate list construction are provided herein. IBC merge candidate list construction (e.g., the existing IBC merge candidate list construction for uni-predictive IBC merge mode) may be used. Feature(s) associated with BV refinement are provided herein. IBC with template matching may be enabled. Feature(s) associated with compensation are provided herein. Final IBC prediction samples may be generated with a simple (e.g., 1:1) average of bi-predictive IBC samples. Feature(s) associated with BV storage are provided herein. The BVs (e.g., two BVs) may be stored in BV storage if the bi-predictive IBC is enabled. Feature(s) associated with signaling are provided herein. A control flag of bi-predictive IBC (e.g., *bi_IBC_flag*) may be signaled (e.g., at a slice level). The control flag of bi-predictive IBC may be signaled in I slices, and may not be signaled in B and/or P slices. Reconstructed-Reordered IBC may be disabled if the bi-predictive IBC is enabled. Certain features may be enabled in chroma component blocks of a coding tree (e.g., the single tree).

IBC may be implemented with Template Matching. For example, Template Matching may be used in IBC for IBC merge mode and/or IBC AMVP mode.

An IBC-TM merge list may be modified compared to a merge list that may be used by regular IBC merge mode. For example, the candidates may be selected according to a pruning method with a motion distance between the candidates, e.g., as in the regular TM merge mode. The ending zero motion fulfillment may be replaced by motion vectors to the left (-W, 0), top (0, -H) and top-left (-W, -H), where W may be the width of the current CU and H may be the height of the current CU.

In the IBC-TM merge mode, the selected candidates may be refined with the Template Matching method, e.g., prior to a rate distortion optimization (RDO) or decoding process. The IBC-TM merge mode may be placed in competition with the regular IBC merge mode. A TM-merge flag may be signaled (e.g., to a decoder).

In the IBC-TM AMVP mode, (e.g., up to three (3)) candidates may be selected from the IBC-TM merge list. The selected candidates (e.g., each of the three (3) selected candidates) may be refined, for example, using the Template Matching method. The (e.g., refined) candidates may be sorted, for example, according to their resulting Template Matching cost. The top or best (e.g., only the first two (2)) candidates may be considered in the motion estimation process.

Template Matching refinement for IBC-TM merge and AMVP modes may be simplified (e.g., simple). IBC motion vectors may be constrained, for example, (i) to be integer and/or (ii) within a reference region. Refinements may be performed at integer precision, for example, in IBC-TM merge mode. In IBC-TM AMVP mode, refinements may be performed at integer or 4-pel precision, for example, depending on the AMVR value. A refinement may be performed, for example, (e.g., only) on samples without interpolation. The refined motion vectors and the used template (e.g., in each refinement operation) may respect the constraint of the reference region.

IBC mode may interact with other coding tools, such as pairwise merge candidate, history-based motion vector predictor (HMVP), combined intra/inter prediction mode (CIIP), IBC merge mode with block vector differences (IBC-MBVD) which is an extension of the merge mode with motion vector difference (MMVD) to the IBC blocks, IBC-LIC (intra block copy with local illumination compensation), and geometric partitioning mode (GPM). For example, IBC may be used with pairwise merge candidate and HMVP. A pairwise IBC merge candidate may be generated, for example, by averaging (e.g. two) IBC merge candidates. IBC motion may be inserted into a history buffer for future referencing, e.g. for HMVP. In some examples, IBC may not be used in combination with an affine motion inter tool. IBC may be used in combination with combined inter-intra prediction (CIIP), MMVD, and/or geometric partitioning mode (GPM). In some examples, IBC may not be allowed for chroma coding blocks, e.g. if/when a DUAL_TREE partition is used. In some examples, IBC may be used with the inter prediction enhancement tool called LIC (local illumination compensation). IBC-LIC can be applied to IBC AMVP mode and IBC merge mode. For IBC AMVP mode, an IBC-LIC flag may be signaled to indicate the use of IBC-LIC. For IBC merge mode, the IBC-LIC flag may be inferred from the merge candidate. For example, IBC-LIC flag can be inherited from an IBC HMVP candidate. IBC-LIC may be applied to the CU whose block size is larger than or equal to 32 and smaller than or equal to 256.

ITMP candidates may be stored for IBC merge/AMVP mode. ITMP derived block vectors may be stored and used in IBC mode. Block vector(s) derived from the ITMP may be used for IBC. The stored ITMP BV of the neighboring blocks along with IBC BV may be used as spatial BV candidates in IBC candidate list construction (IBC merge/AMVP list).

ITMP block vector may be stored, and the current IBC block can use both IBC BV and ITMP BV of neighbouring blocks as a candidate in the IBC merge/AMVP candidate list. For example, if the neighbouring CU is coded in ITMP mode, its BV may be added to the IBC merge/AMVP list.

ITMP block vectors may be fetched from the neighbouring blocks and added to IBC block vector candidate list as spatial candidates (local and non-local candidates). ITMP block vectors may be stored in quarter-pel resolution for coding of IBC block vectors and HMVP.

ITMP BVs may be stored for the purpose of coding future IBC blocks, after coding the block in the ITMP mode. As used herein, the ITMP block vector may be or may include the final selected block of an ITMP CU. The ITMP BV may be indicated with itmp_idx (intra tmp_idx) as described herein.

If a neighboring CU is coded in ITMP mode, the selected ITMP BV may be indicated by an ITMP index (e.g., intra_tmp_idx, itmp_idx) signaled in a bitstream, for example. As described herein, the selected ITMP BV may or may not be the one with the smallest template cost. The BV with the smallest template cost, which may be, for example, the first candidate on a final ITMP candidate list, may have or be associated with an itmp_idx equal to 0. The BV with the best/smallest template matching cost may be referred to as the best-by-cost ITMP block vector.

The same concept may be extended to the IBC with template matching reordering. In examples, after template matching is performed, one candidate may be selected from the IBC merge/AMVP list, and the selected candidate may not be the one with the smallest TM cost. The BV with the best/smallest template matching cost may be denoted here as best-by-cost IBC block vector.

In examples, the BV with the best/smallest template matching cost whether it is IBC or ITMP BV may be denoted herein as best-by-cost block vector.

In ITMP merge mode, merge candidates may be fetched from the neighboring CUs coded in ITMP mode and IBC mode. When constructing the ITMP merge list, if the neighboring CU is coded in ITMP mode and itmp_idx is greater than 0 (itmp_idx>0), the selected ITMP block vector and best-by-cost block vector of the neighboring CU may be added as ITMP merge candidates. ITMP merge list then includes the selected ITMP block vector indicated with itmp_idx and the vector with itmp_idx=0, which is the vector with the best/smallest template matching cost, and which may be referred to as the best-by-cost ITMP block vector.

The selected and best-by-cost BVs may be the same, for example, if intra_tmp_idx is equal to 0, in which case one candidate may be included in the ITMP merge list.

If one of the neighboring CUs is coded with ITMP mode, two vectors may be added to the ITMP merge list, e.g., if itmp_idx>0.

In IBC merge/AMVP mode, candidates may also be fetched from the neighboring CUs coded in ITMP mode and IBC mode. However, compared to the ITMP merge list, IBC merge/AMVP list may use, e.g., may only use, a selected BV from the neighboring CU coded with ITMP mode. The best-by-cost block vector, if the itmp_idx is greater than 0 (itmp_idx>0), may not be included in IBC merge/AMVP list. Also, best-by-cost IBC BV may not be included in an IBC merge/AMVP list nor in an ITMP merge list.

Improved compression efficiency of video codecs, in particular, for blocks coded in IBC mode when IBC merge/AMVP list is utilized and/or for blocks coded in ITMP mode when ITMP merge list is utilized, may be provided. Disclosed herein are implementations for improving performance by storing the best-by-cost ITMP and/or best-by-cost IBC block vector, and by including the best-by-cost BV in the IBC merge/AMVP list and/or ITMP merge list. The IBC merge/AMVP list and/or ITMP merge list may be enriched with new candidates which may lead to improved, e.g., better, performance.

Disclosed herein are implementations to improve ITMP performance by storing the best-by-cost IBC block vector of the IBC coded CU, and by including a best-by-cost IBC BV in an ITMP merge list. The ITMP merge list may be enriched with new candidates which may lead to improved, e.g., better performance. The best-by-cost IBC block vector of the IBC coded CU may be included in constructing IBC merge/AMVP list.

Since a best-by-cost BV may already be included in an ITMP merge list, it may also be favorable to take this BV into account when creating an IBC merge/AMVP list.

As described herein, IBC may use TM reordering of the merge/AMVP list. After TM reordering, one candidate may be selected (whether in IBC merge or IBC AMVP mode) and signaled to the decoder. But the selected candidate may not be, e.g., may not necessarily be, the candidate with the smallest cost. In such case, one additional BV candidate from the IBC merge/AMVP list may be stored and used later. For example, neighboring IBC candidates may be used in IBC mode and ITMP merge mode. Then, when a neighboring CU is coded in IBC mode, when fetching a BV, it may fetch a selected BV and/or a best-by-cost BV.

Implementations relating to IBC merge/AMVP candidates are disclosed. The best-by-cost ITMP and/or IBC candidate (if/when reordering, e.g., based on TM cost, of IBC candidates is enabled) may be included in an IBC merge/AMVP list of candidates. Also, the best-by-cost IBC candidate (if/when reordering, e.g., based on TM cost, of IBC candidates is enabled) may be included in the ITMP merge list.

In the following examples, it may be presumed that reordering, e.g., reordering based on TM cost, of IBC candidates may be enabled.

Implementations may include one or more of the following examples.

In examples, if a CU is coded with ITMP mode, a device may store an ITMP best-by-cost BV for future use, e.g., in IBC prediction mode. The two BVs may be stored when the ITMP mode is enabled and added to the IBC merge/AMVP list.

In examples, if a CU is coded with IBC mode, and reordering of the IBC candidates is enabled, a device may store IBC best-by-cost BV for future use, e.g., in IBC or ITMP merge mode. The two BVs may be stored when the IBC and reordering mode (e.g., TM reordering) is enabled.

In examples, if a neighboring CU is coded with ITMP mode or IBC mode, besides adding the selected BV, a device may also add the best-by-cost BV in an IBC merge/AMVP list.

If a neighboring CU is coded in IBC mode, and reordering of the IBC candidates is enabled, besides adding the selected BV, a device may also add the best-by-cost BV in an ITMP merge list.

In examples, if a neighboring CU is coded with ITMP mode or IBC mode, instead of adding the selected BV, a device may add the best-by-cost BV in IBC merge/AMVP list.

If a neighboring CU is coded using IBC mode, and reordering of the IBC candidates is enabled, instead of adding the selected BV, a device may add the best-by-cost BV in ITMP merge list.

In examples, if a neighboring CU is coded with ITMP mode or IBC mode, a device may add a combination of the best-by-cost BV and the selected BV in IBC merge/AMVP list. The combination may be generated by performing one or more of the following: averaging two vectors; generating a sum of vectors; generating a weighted sum of vectors, etc.

Also, if the neighboring CU is coded in IBC mode, and reordering of the IBC candidates is enabled, a device may add a combination of the best-by-cost BV and the selected BV in the ITMP merge list. The combination may be generated by performing one or more of the following: averaging two vectors; generating a sum of vectors; generating a weighted sum of vectors, etc.

In examples, an IBC merge/AMVP list may be utilized as usual. Also, an ITMP merge list may be utilized as usual.

In examples, the selected BV and the best-by-cost BV may be the same BV. If the BVs are the same BV, then one candidate may be stored and included in the IBC merge/AMVP list and/or ITMP merge list.

In examples, IBC and/or ITMP mode may exhibit improved efficiency due to employing diverse block vectors.

The ITMP best-by-cost and the ITMP selected block vectors may be stored and later added to the IBC merge/AMVP list, e.g., if itmp_idx>0. Otherwise, if itmp_idx is equal to 0, the best-by-cost BV may be, at the same time, also selected as the ITMP BV.

In examples, with respect to IBC mode which may include TM reordering, a device may store the best-by-cost BV and propagate the BV for future use.

Accordingly, a device may store and propagate a BV which may not have been previously used for encoding/-decoding but has been found as a potentially good BV.

Examples described herein may be generalized to any mode or method that uses TM and/or sorting of candidates based on a cost. If a method enables sorting and then uses a subset of the most probable candidates, out of which it may select the final one, the use of best-by-cost storing and its further use may be employed. If the candidate with the smallest cost may not be the used or selected BV candidate, then best-by-cost storing and propagating as described herein may be used.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A device for video decoding, comprising:
   a processor configured to:

   determine for a current block coded with intra-block copy (IBC) mode, a plurality of candidate block vectors;
   determine for each of the plurality of candidate block vectors a respective template matching cost;
   determine, from the plurality of candidate block vectors, a block vector with a best template matching cost; and
   store the block vector with the best template matching cost for decoding a second block.

2. A device for video encoding, comprising:
   a processor configured to:

   determine for a current block coded with intra-block copy (IBC) mode, a plurality of candidate block vectors;
   determine for each of the plurality of candidate block vectors a respective template matching cost;
   determine, from the plurality of candidate block vectors, a block vector with the best template matching cost; and
   store the block vector with the best template matching cost for encoding a second block.

3. The device of claim 1 or 2, wherein the processor is further configured to:

   select a block vector for the current block from the plurality of candidate block vectors; and
   store the block vector selected for the current block in addition to the block vector with the best template matching cost.

4. The device of claim 1 or 2, wherein the processor is further configured to:

select a block vector for the current block from the plurality of candidate block vectors, wherein the stored block vector with the best template matching cost is different from the block vector selected for the current block.

**5.** The device of any of claims 1-4, wherein the processor is further configured to:
add the block vector with the best template matching cost to a block vector candidate list associated with the second block.

**6.** The device of claim 4,

wherein the stored block vector with the best template matching cost is different from the block vector selected for the current block;
wherein the processor is further configured to obtain a combined block vector based on the stored block vector with the best template matching cost and the block vector selected for the current block; and
wherein the processor configured to store the block vector with the best template matching cost is further configured to store the combined block vector.

**7.** The device of claim 6,
wherein the processor is further configured to add the combined block vector to a block vector candidate list associated with the second block.

**8.** The device of claims 5 or 7, wherein the candidate list is one of an IBC merge and advanced motion vector prediction (AMVP) candidate list or an intra template matching prediction (ITMP) candidate list.

**9.** The device of claim 1,

wherein the processor is further configured to:
determine for a second block coded with intra template matching prediction (ITMP) mode, a second plurality of candidate block vectors;
determine for each of the second plurality of candidate block vectors a respective template matching cost;
determine, from the second plurality of candidate block vectors, a second block vector with the best template matching cost; and
add the second block vector with the best template matching cost to at least one block vector candidate list associated with a third block, the at least one block vector candidate list comprising an IBC merge and AMVP candidate list.

**10.** A method of video decoding, comprising:

determining for a current block coded with intra-block copy (IBC) mode, a plurality of candidate block vectors;
determining for each of the plurality of candidate block vectors a respective template matching cost;
determining, from the plurality of candidate block vectors, a block vector with a best template matching cost; and
storing the block vector with the best template matching cost for decoding a second block.

**11.** A method of video encoding, comprising:

determining for a current block coded with intra-block copy (IBC) mode, a plurality of candidate block vectors;
determining for each of the plurality of candidate block vectors a respective template matching cost;
determining, from the plurality of candidate block vectors, a block vector with the best template matching cost; and
storing the block vector with the best template matching cost for encoding a second block.

**12.** The method of claim 10 or 11, further comprising:

selecting a block vector for the current block from the plurality of candidate block vectors; and
storing the block vector selected for the current block in addition to the block vector with the best template matching cost.

**13.** The method of any of claims 10-12, further comprising:
adding the block vector with the best template matching cost to a block vector candidate list associated with the second block.

14. The method of claim 13, wherein the candidate list is one of an IBC merge and advanced motion vector prediction (AMVP) candidate list or an intra template matching prediction (ITMP) candidate list.

15. A computer program product stored on a computer readable medium and comprises program code instructions for implementing the steps of a method according to any of claims 10 through 14 when executed by a processor.

100

116

104
RAN

102a

116

102b

116

114a

102c

116

116

102d    114b

108
PSTN

106
Core Network

112
Other
Networks

110
Internet

**FIG. 1A**

116

102

122

| | 120 Transceiver | |
| 124 Speaker/ Microphone | | 134 Power Source |
| 126 Keypad | 118 Processor | 136 GPS Chipset |
| 128 Display/ Touchpad | | 138 Peripherals |
| 130 Non-Removable Memory | 132 Removable Memory | |

# FIG. 1B

FIG. 1C

**FIG. 1D**

**FIG. 2**

EP 4 633 160 A1

**300**

**FIG. 3**

EP 4 633 160 A1

FIG. 4

FIG. 5

Refinement Search

Sparse Search

FIG. 6

**FIG. 7**

**FIG. 8**

FIG. 9

| | | m-2, n-2 | m-1, n-2 | m, n-2 | m+1, n-2 | | |
| m-2, n-1 | m-1, n-1 | m, n-1 | m+1, n-1 | | |
| m-2, n | m-1, n | m, n | | | |

**FIG. 10**

FIG. 11

FIG. 12

FIG. 13

Europäisches
Patentamt

European
Patent Office

Office européen
des brevets

## EUROPEAN SEARCH REPORT

**Application Number**

EP 24 30 5574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NASER (INTERDIGITAL) K ET AL: "EE2-1.2: IntraTMP with Merge Candidates", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG0151 10 January 2024 (2024-01-10), XP030314107, Retrieved from the Internet: URL:https://jvet-experts.org/doc_end_user/ documents/33_Teleconference/wg11/JVET-AG01 51-v1.zip JVET-AG0151-0.2.docx [retrieved on 2024-01-10] * the whole document * ----- | 1-15 | INV. H04N19/176 H04N19/52 H04N19/593 |
| X | WANG YANG ET AL: "Local-Aware Intra Block Copy for Video Coding", 2023 IEEE INTERNATIONAL SYMPOSIUM ON CIRCUITS AND SYSTEMS (ISCAS), IEEE, 21 May 2023 (2023-05-21), pages 1-5, XP034381085, DOI: 10.1109/ISCAS46773.2023.10181637 [retrieved on 2023-07-21] * the whole document * ----- -/-- | 1-15 | **TECHNICAL FIELDS SEARCHED (IPC)**<br><br>H04N |

The present search report has been drawn up for all claims

| Place of search | Date of completion of the search | Examiner |
|---|---|---|
| Munich | 23 August 2024 | Schoeyer, Marnix |

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LE LEANNEC (XIAOMI) F ET AL: "EE2 related: Extension of test EE2-3.3", 28. JVET MEETING; 20221021 - 20221028; MAINZ; (THE JOINT VIDEO EXPLORATION TEAM OF ISO/IEC JTC1/SC29/WG11 AND ITU-T SG.16 ), , no. JVET-AB0144 ; m60926 14 October 2022 (2022-10-14), XP030304675, Retrieved from the Internet: URL:https://jvet-experts.org/doc_end_user/documents/28_Mainz/wg11/JVET-AB0144-v1.zip JVET-AB0144-0.0.docx [retrieved on 2022-10-14] * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 23 August 2024 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**REFERENCES CITED IN THE DESCRIPTION**

**Patent documents cited in the description**

- CN 106115